# EUROPEAN PATENT APPLICATION

(11) **EP 3 659 974 A1**
(43) Date of publication of application: **03.06.2020**
(21) Application number: 18208473.1
(22) Date of filing: 27.11.2018
(51) Int. Cl.: C01G 53/00, H01M 4/525, H01M 10/0525

(54) **PROCESS FOR MAKING A NICKEL COMPOSITE HYDROXIDE**

(71) Applicant: BASF SE, 67056 Ludwigshafen am Rhein (DE)
(72) Inventor: BEIERLING, Thorsten, 67056 Ludwigshafen (DE); PFISTER, Daniela, 67056 Ludwigshafen (DE); SCHROEDLE, Simon, 103-0022 Tokyo (JP)
(74) Representative: BASF IP Association

(57) **Abstract**

The present invention is directed towards a process for preparing a nickel composite hydroxide with a mean particle diameter in the range from 3 to 20 µm (d50) comprising the step(s) of combining
(a) an aqueous solution of water-soluble salts of nickel and of at least one of cobalt and manganese, and, optionally, at least one of Al, Mg, B, or transition metals other than nickel, cobalt, and manganese,
(b) with an aqueous solution of an alkali metal hydroxide and
(c) with an organic acid or alkali or ammonium salt of an organic acid or an anhydride of an organic acid wherein said organic acid whose nickel(+II) salt has a solubility of 1g/l or less in water at 20°C and, optionally, with
(d) an aqueous solution of alkali metal aluminate.

## Description

The present invention is directed towards a process for preparing a nickel composite hydroxide with a mean particle diameter in the range from 3 to 20 µm (d50) comprising the step(s) of combining
(a) an aqueous solution of water-soluble salts of nickel and of at least one of cobalt and manganese, and, optionally, at least one of Al, Mg, B, or transition metals other than nickel, cobalt, and manganese,
(b) with an aqueous solution of an alkali metal hydroxide and
(c) with an organic acid or alkali or ammonium salt of an organic acid or an anhydride of an organic acid whose nickel(+II) salt has a solubility of 1g/l or less in water at 20°C and, optionally, with
(d) an aqueous solution of alkali metal aluminate.

Secondary batteries, accumulators or rechargeable batteries are just some embodiments by which electrical energy can be stored after generation and used (consumed) when required. Owing to the significantly better power density, there has been a departure in recent times from the water-based secondary batteries and development of batteries in which the charge transport is accomplished by lithium ions.

The electrode material is of crucial importance for the properties of a lithium ion battery. Lithium-containing mixed transition metal oxides have gained particular significance, for example spinels and mixed oxides of layered structure, especially lithium-containing mixed oxides of nickel, manganese and cobalt; see, for example, EP 1 189 296. However, not only the stoichiometry of the electrode material is important, but also other properties such as morphology and surface properties.

Corresponding mixed oxides are prepared generally using a two-stage process. In a first stage, a sparingly soluble salt of the transition metal(s) is prepared by precipitating it from a solution, for example a carbonate or a hydroxide. This sparingly soluble salt is in many cases also referred to as a precursor. In a second stage, the precipitated salt of the transition metal(s) is mixed with a lithium compound, for example Li₂CO₃, LiOH or Li₂O, and calcined at high temperatures, for example at 600 to 1100°C.

Existing lithium ion batteries still have potential for improvement, especially with regard to the energy density. For this purpose, the cathode material should have a high specific capacity. It is also advantageous when the cathode material can be processed in a simple manner to give electrode layers of thickness from 20 µm to 200 µm which should have a high density in order to achieve a maximum energy density (per unit volume).

In EP 3 225 591 A1, a process for making transition metal hydroxides is disclosed. For the coprecipitation, alkali metal hydroxide is mixed with a minor amount of carbonate. A carbonate containing composite hydroxide with a narrow particle size distribution is obtained.

It was an objective of the present invention to provide a precursor from which excellent electrode active materials for lithium ion batteries may be synthesized, especially with respect to volumetric energy density by combining high gravimetric capacity and high tap density of the respective electrode active material. It was furthermore an objective of the present invention to provide a suitable process for making such precursors.

Accordingly, the process defined at the outset has been found, hereinafter also referred to as inventive process or process according to the (present) invention.

The inventive process is a process for making a nickel composite hydroxide with a mean particle diameter (d50) in the range from 3 to 20 µm, preferably 4 to 15 µm. The mean particle diameter (d50) in the context of the present invention refers to the median of the volume-based particle diameter, as can be determined by light scattering, for example.

In one embodiment of the present invention, the width of the particle diameter distribution of nickel composite hydroxide made according to the present invention is in the range of from 0.5 to 2.5, preferably 0.6 to 1.5, expressed as [(d90-d10)/(d50) diameter].

In another embodiment of the present invention, the width of the particle diameter distribution of nickel composite hydroxide made according to the present invention is in the range of from more than 2.5 to 3.0, expressed as [(d90-d10)/(d50) diameter].

The process according to the invention relates to the preparation of nickel composite hydroxides. In the context of the present invention, "nickel composite hydroxides" includes not only stoichiometrically pure hydroxides of nickel and at least one of cobalt and manganese, but especially also cations other than transition metal cations, namely magnesium cations, and, optionally, one more cation other than transition metal cations, for example aluminum or boron - as borate - and alkali metal ions, and, optionally, anions other than hydroxide ions, for example oxide ions and carbonate ions and sulfate anions.

In one embodiment of the present invention, the term "nickel composite hydroxides" refers to composite hydroxides of nickel and at least one of cobalt and manganese and, optionally, at least one of aluminum, magnesium, boron, and transition metals other than nickel, cobalt, and manganese, wherein the molar content of nickel is in the range from 60 to 98%, referring to the cations in said nickel composite hydroxide.

Said composite hydroxide of nickel may contain traces of other metal ions, for example traces of ubiquitous metals such as sodium, Ca or Zn, but such traces will not be taken into account in the description of the present invention. Traces in this context will mean amounts of 0.01 mol-% or less, referring to the total metal content of said composite hydroxide of nickel.

Said nickel composite hydroxide contains a certain amount of AOA, wherein AOA is the anion of the respective organic acid whose nickel(+II) salt has a solubility of 1 g/l or less in water at 20°C.

In one embodiment of the present invention, said nickel composite hydroxide contains a combination of transition metals and further metals according to general formula (I)

(NiₐCo_{b}Al_{c})_{1-d}M_{d} (I)

- a: is in the range from 0.70 to 0.95,
- b: is in the range of from 0.025 to 0.2,
- c: is in the range of from 0.005 to 0.1, and
- d: is in the range of from zero to 0.05,

M is selected from Ti, Zr, W, Mo, Nb, and Mg, and combinations of at least two of the foregoing,
wherein a + b + c = 1.0.

In a preferred embodiment of the present invention, said nickel composite hydroxide contains a combination of transition metals and further metals according to general formula (III)

(NiₐCo_{b}Al_{c})_{1-d}M_{d} (III)

wherein:
- a: is in the range from 0.80 to 0.95,
- b: is in the range of from 0.025 to 0.195,
- c: is in the range of from 0.02 to 0.05, and
- d: is in the range of from zero to 0.03,

- M: is selected from one or more of Ti, Zr, W, Mo, Nb, and Mg, and combinations of Mg and at least one of Ti, Zr, and W,
wherein a + b + c = 1.0 and b + c < 0.20.

In one embodiment of the present invention, said nickel composite hydroxide contains a combination of transition metals and further metals according to general formula (IV)

(NiₐCo_{b}Mn_{c})_{1-d}M_{d} (IV)

with
a being in the range of from 0.6 to 0.95,
b being in the range of from 0.025 to 0.2,
c being in the range of from 0.025 to 0.2, and
d being in the range of from zero to 0.1,
M is selected from Al, Mg, Ti, Zr, W and Nb and combinations of at least two of the foregoing, and
a + b + c = 1.

In one embodiment of the present invention, M includes Mg in the range of from 0.1 to 2.5 mol-% per sum of metals in said nickel composite hydroxide.

In one embodiment of the present invention, nickel composite hydroxide has 0.01 to 10 mol% and preferably 0.3 to 5 mol% of anions other than hydroxide or AOA ions, based on the total number of anions, for example sulfate.

The inventive process comprises the step(s) of combining
(a) an aqueous solution of water-soluble salts of nickel and of at least one of cobalt and manganese, and, optionally, at least one of Al, Mg, B, or transition metals other than nickel, cobalt, and manganese, hereinafter also referred to as "solution (a)",
(b) with an aqueous solution of an alkali metal hydroxide, hereinafter also referred to as "solution (b)", and
(c) with an organic acid or alkali or ammonium salt of an organic acid or an anhydride of an organic acid whose nickel(+II) salt has a solubility of 1g/l or less in water at 20°C, hereinafter also referred to as "compound (c)".

The term "water-soluble salts" of nickel or of metals other than nickel refers to salts that exhibit a solubility in distilled water at 25°C of 25 g/l or more, the amount of salt being determined under omission of crystal water and of water stemming from aquo complexes. Water-soluble salts of nickel, cobalt and manganese may preferably be the respective water-soluble salts of Ni²⁺, Co²⁺, and Mn²⁺. Examples of water-soluble salts of nickel and cobalt and manganese are the sulfates, the nitrates, the acetates and the halides, especially chlorides. Preferred are nitrates and sulfates, of which the sulfates are more preferred.

In one embodiment of the present invention, the concentration of solution (a) can be selected within wide ranges. Preferably, the total concentration is selected such that they are within the range of, in total, 1 to 1.8 mol of the transition metals/kg of solution, more preferably 1.5 to 1.7 mol of the transition metals/kg of solution. "The transition metal salts" used herein refers to the water-soluble salts of nickel, cobalt and manganese, as far as applicable.

Solution (a) may have a pH value in the range of from 2 to 6. In embodiments wherein higher pH values are desired, ammonia may be added to solution (a).

Solution (b) is an aqueous solution of alkali metal hydroxide. An example of alkali metal hydroxides is lithium hydroxide, preferred is potassium hydroxide and a combination of sodium and potassium hydroxide, and even more preferred is sodium hydroxide.

In one embodiment of the present invention, solution (b) has a concentration of alkali metal hydroxide in the range from 1 to 50% by weight, preferably 10 to 40% by weight, percentages referring to entire solution (b).

The pH value of solution (b) is preferably 13 or higher, for example 14.

Compound (c) is an organic acid whose nickel(+II) salt has a solubility of 1g/l or less in water at 20°C, wherein water refers to distilled water. Examples are oxalic acid, formic acid, maleic acid, maleic anhydride, fumaric acid, benzoic acid, and sorbic acid. Compound (c) may be employed as free acid - or anhydride, if applicable - or as alkali metal salt, in bulk or in solution.

In one embodiment of the present invention, compound (c) or its respective alkali metal salt are provided as aqueous solution with a concentration in the range of from 0.1 to 15 % by weight, preferably 0.2 to 5% by weight.

In one embodiment of the present invention, compound (c) is provided as an aqueous solution with a pH value in the range of from 1 to 4. In another embodiment, compound (c) is provided as an aqueous solution of its alkali metal salt, for example its sodium salt, with a pH value in the range of from 7.5 to 10.

In one embodiment of the present invention, the inventive process includes the addition of a solution (d) comprising alkali metal aluminate, for example potassium aluminate and especially sodium aluminate, for example with a concentration in the range of from 1 to 15% by weight. The pH value of solution (d) may be in the range of from 13 to more than 14.

In one embodiment of the present invention, the inventive process is performed at temperatures in the range from 10 to 85°C, preferably at temperatures in the range from 20 to 60°C.

In one embodiment of the present invention, solution (b) and compound (c) are combined first followed by a combination with solution (a). The step of combining solution (b) and compound (c) may also be referred to as "base pre-mixing step". The base pre-mixing step may be performed at a temperature in the range of from 10 to 90°C.

In one embodiment of the present invention, solution (a) and compound (c) are combined first followed by combination with solution (b). In said embodiment, it is preferred that the pH value after combination of solutions (a) and (c) and before addition of solution (b) is in the range of from 1 to 5 so a premature precipitation of nickel salt of organic acid can be avoided.

Solution (d), if applicable, may be combined with solution (b) first or during the base pre-mixing step. In on embodiment of the present invention, solutions (a) and (b) and compound (c) and - if applicable - solution (d) are combined simultaneously, for example through different entries into a continuous stirred tank reactor.

In one embodiment of the present invention, the pH value at the end of the step of combining solutions (a) and (b) and compound (c) and solution (d), if applicable, is in the range from 8 to 12, preferably 10.5 to 12.0, more preferably 11.3 to 12.9 and even more preferably from 11.5 to 12.8, each measured in the mother liquor at 23°C.

Solution (d), if applicable, may be combined with solution (b) first or during the base pre-mixing step. In other embodiments, solution (d) is combined with solutions (a), (b) and (c) simultaneously.

The inventive process may be carried out in the batch mode or in the continuous mode, for example in a continuous stirred tank reactor or in a cascade of at least two continuous tank reactors.

In one embodiment of the present invention, the inventive process is carried out in a cascade of at least two continuous stirred tank reactors, and (a) is combined with (b) and (c) in the first tank reactor at a pH value in the range of from 12.0 to 12.8 and in the second tank reactor at a pH value in the range of from 11.5 to 12.4. Preferably, such cascade has exactly two stirred tank reactors. In such embodiments, a better particle growth can be achieved. Preferably, such cascade has exactly two stirred tank reactors.

In one embodiment of the present invention, the inventive process has a duration in the range of from 1 hour to 10 hours. In embodiments wherein the inventive process is carried out in a continuous mode, the duration corresponds to the average residence time.

In one embodiment of the present invention, the inventive process is performed at a pressure in the range from 500 mbar to 20 bar, preferably standard pressure (1 atm).

In one embodiment of the present invention, the content of oxygen dissolved in the slurry formed in the inventive process is reduced by bubbling a rare gas or nitrogen through the slurry during the inventive process.

In one embodiment of the present invention, an excess of precipitant is used, for example an excess of the sum of compound (c) and alkali metal hydroxide, based on transition metal. The molar excess may, for example, be in the range from 1.01:1 to 100:1. It is preferable to work with a stoichiometric proportion of precipitant.

In one embodiment of the present invention, the inventive process is performed in the presence of at least one compound L which may serve as a ligand for at least one of the transition metals, for example in the presence of at least one organic amine or especially of ammonia. In the context of the present invention, water should not be regarded as a ligand. Compound L may be added together with solution (a) or compound (c) or separately.

In one embodiment of the present invention, a concentration of L, especially of ammonia, within the range from 0.05 to 1 mol/l, preferably 0.1 to 0.7 mol/l, is selected. Particular preference is given to amounts of ammonia for which the solubility of Ni²⁺ in the mother liquor is not more than 1000 ppm, more preferably not more than 500 ppm.

In one embodiment of the present invention, mixing during the inventive process is effected, for example, with a stirrer. Preference is given to introducing a stirrer output of at least 0.4 W/l into the reaction mixture, preferably up to 8 W/l and more preferably up to 4 W/l.

A further aspect of the present invention is directed towards nickel composite hydroxides, hereinafter also referred to as inventive nickel composite hydroxides. Inventive nickel composite hydroxides are in particulate form with a mean particle diameter in the range from 3 to 20 µm (d50), contain in the range of from 60 to 95 mole-% Ni and at least one transition metal selected from Co and Mn, and in the range of from 0.1 to 3.0 % by weight of anion of an organic acid whose nickel(+II) salt has a solubility of 1 g/l or less in water at 20°C, referring to said nickel composite hydroxide.

In a preferred embodiment of the present invention, inventive nickel composite hydroxides have a composition according to general formula (II)

(NiₐCo_{b}Al_{c})_{1-d}M_{d}Oₓ(OH)_{y}(AOA)ₜ (II)

wherein
- a: is a number in the range from 0.70 to 0.95, preferably 0.80 to 0.95,
- b: is in the range of from 0.025 to 0.2, preferably 0.025 to 0.195,
- c: is in the range of from 0.005 to 0.1, preferably from 0.02 to 0.05, and
- d: is in the range of from zero to 0.05,

- M: is selected from Mg, B and transition metals other than Co and Mn, preferably Mg or a combination of Mg and at least one of B and a transition metals other than Co and Mn, for example Zr, Ti, W or Nb,

AOA is an anion of an organic acid whose nickel(+II) salt has a solubility of 1 g/l or less in water at 20°C,
wherein a + b + c = 1.0 and
0 ≤ x < 1,
1 < y ≤ 2.1, and
0.001 ≤ t ≤ 0.05.

Preferably, b + c < 0.20.

Examples of AOA are organic acids with one to 7 carbon atoms per molecule. Preferred examples of AOA are formate, oxalate, maleate as dianion, fumarate, benzoate, and sorbate. More preferred are formate and oxalate.

In one embodiment of the present invention, the width of the particle diameter distribution of inventive nickel composite hydroxide made according to the present invention is in the range of from 0.5 to 2.5, preferably 0.6 to 1.5, expressed as [(d90-d10)/(d50) diameter].

In another embodiment of the present invention, the width of the particle diameter distribution of inventive nickel composite hydroxide made according to the present invention is in the range of from more than 2.5 to 3.0, expressed as [(d90-d10)/(d50) diameter].

In one embodiment of the present invention, inventive nickel composite hydroxide has a specific surface (BET) in the range of from 2 to 70 m²/g, preferably 5 to 70 m²/g, determined after out-gassing at 120°C for 40 minutes and in accordance with ASTM D3663:2003.

Such nickel composite hydroxides are excellently useful for making cathode active materials for lithium ion batteries. Another aspect of the present invention is thus the use of inventive nickel composite hydroxides as precursors for the manufacture of cathode active materials for lithium ion batteries. Another aspect of the present invention is a process for making cathode active materials for lithium ion batteries wherein said process comprises the steps of mixing an inventive nickel composite hydroxide with a lithium source such as, but not limited to Li₂CO₃, Li₂O, LiNO₃, LiOH or LiOH·H₂O, and thermally treating such mixture in the presence of oxygen and at a temperature in the range of from 600 to 900°C. Preferred lithium sources are Li₂CO₃, Li₂O, LiOH and LiOH·H₂O and combinations of at least two of the foregoing. Without wishing to be bound by any theory we assume that in the course of such thermal treatment, the AOA decomposes and leads to a higher porosity of the resultant electrode active materials compared to electrode active materials resulting from AOA-free precursors.

The present invention is further illustrated by a working example.

All percentages are percent by weight unless specifically indicated otherwise.

The following solutions were made:
Solution (a.1): aqueous solution of NiSO₄ and CoSO₄ (molar ratio Ni:Co of 19:1) with a total metal concentration of 1.63 mol/kg
Solution (b.1): aqueous solution of NaOH, 25% by weight
Solution (c.1): aqueous solution of Na₂C₂O₄ 5% by weight
Solution (d.1): 10% by weight aqueous solution of NaAlO₂ in water
   Ammonia solution: 25% by weight aqueous NH₃ solution

Solution (b.1) and (c.1) were mixed so that the molar ratio of oxalate to hydroxide was 0.002.

A 46-I stirred tank reactor with overflow system was charged with aqueous 3% by weight ammonium sulfate solution. The temperature in the tank reactor was set to 60°C while the ammonium sulfate solution was stirred. Nitrogen gas flow was introduced into the reactor to decrease oxygen content in the reaction volume below 2%.

Solution (a.1) was introduced to the reactor at a rate of 8.6 kg/h. Simultaneously, solution (d.1), the ammonia solution and the combined solutions (b.1) and (c.1) were introduced through separate feeds into the reactor at rates of 0.135 kg/h, 0.39 kg/h and 3.2 kg/h, respectively. The flow rate of the combined solutions (b.1) and (c.1) was adjusted by a pH regulation circuit to keep the pH value in the range of 12.2±0.1.

Throughout the process, reaction temperature was maintained at 60°C and the stirring speed was set to introduce about 2W/l into reaction volume. The stirred tank reactor was operated continuously keeping the liquid level in the reactor vessel essentially constant. Inventive nickel composite hydroxide was collected via free overflow from the stirred tank reactor and isolated by filtration.

The metal combination of the resultant nickel composite hydroxide is Ni_{0.905}Co_{0.475}Al_{0.475}. The variable t in the respective formula (1.1) corresponds to 0.048. The average particle diameter (D50) is 13 µm.

The inventive nickel composite hydroxide is mixed with LiOH in about equimolar amounts. The resulting mixture is calcined at 755°C for 9 hours in a forced flow of oxygen-enriched air, molar ratio O₂/N₂ of 3:2. A cathode active material is obtained that exhibits high gravimetric capacity and high tap density.

## Claims

1. A process for preparing a nickel composite hydroxide with a mean particle diameter in the range from 3 to 20 µm (d50) comprising the step(s) of combining
(a) an aqueous solution of water-soluble salts of nickel and of at least one of cobalt and manganese, and, optionally, at least one of Al, Mg, B, or transition metals other than nickel, cobalt, and manganese,
(b) with an aqueous solution of an alkali metal hydroxide and
(c) with an organic acid or alkali or ammonium salt of an organic acid or an anhydride of an organic acid whose nickel(+II) salt has a solubility of 1g/l or less in water at 20°C, and, optionally, with
(d) an aqueous solution of alkali metal aluminate.

2. Process according to claim 1 wherein said nickel composite hydroxide contains a combination of transition metals and further metals according to general formula (I)
(NiₐCo_{b}Al_{c})_{1-d}M_{d} (I)
a is in the range from 0.60 to 0.95,
b is in the range of from 0.025 to 0.2,
c is in the range of from 0.005 to 0.1, and
d is in the range of from zero to 0.05,
M is selected from Ti, Zr, W, Mo, Nb, and Mg, and combinations of at least two of the foregoing,
wherein a + b + c = 1.0.

3. Process according to claim 1 or 2 wherein said process is carried out a pH value in the range of from 11 to 13.

4. Process according to any of the preceding claims wherein said process is carried out in a batch mode.

5. Process according to any of claims 1 to 3 wherein said process is carried out in a continuous mode.

6. Process according to any of the preceding claims wherein said organic acid bears in the range of from one to seven carbon atoms per molecule.

7. Process according to any of the preceding claims wherein said organic acid is selected from oxalic acid, formic acid and maleic acid.

8. Process according to any of the preceding claims wherein M includes Mg in the range of from 0.1 to 2.5 mole-%, referring to the sum of metals in the respective nickel composite hydroxide.

9. Process according to any of the preceding claims wherein water-soluble salts are selected from sulfates and nitrates.

10. A nickel composite hydroxide in particulate form with a mean particle diameter in the range from 3 to 20 µm (d50), containing in the range of from 60 to 95 mole-% Ni and at least one transition metal selected from Co and Mn, and in the range of from 0.1 to 3.0 % by weight of carboxylate whose Ni(+II) salt has a solubility in water at 20°C of 1g/l or less, and the percentage referring to said nickel composite hydroxide.

11. Nickel composite hydroxide according to claim 10 having a composition according to formula (II)
(NiₐCo_{b}Al_{c})_{1-d}M_{d}Oₓ(OH)_{y}(AOA)ₜ (II)
wherein:
a is in the range from 0.60 to 0.95,
b is in the range of from 0.025 to 0.2,
c is in the range of from 0.005 to 0.1, and
d is in the range of from zero to 0.05,
M is selected from Ti, Zr, W, Mo, Nb, and Mg, and combinations of at least two of the foregoing,
AOA is an anion of an organic acid whose nickel(+II) salt has a solubility of 1 g/l or less in water at 20°C,
wherein a + b + c = 1.0 and
0.001 ≤ t ≤ 0.05
0 ≤ x < 1,
1 < y ≤ 2.1.

12. Nickel composite hydroxide according to claim 10 or 11, wherein the metal part has a composition according to general formula (III)
(NiₐCo_{b}Al_{c})_{1-d}M_{d}(AOA)ₜ (III)
wherein
a is in the range from 0.80 to 0.95,
b is in the range of from 0.025 to 0.195,
c is in the range of from 0.02 to 0.05, and
d is in the range of from zero to 0.035,
M is selected from one or more of Ti, Zr, W, Mo, Nb, and Mg, and combinations of Mg and at least one of Ti, Zr, and W,
0.001 ≤ t ≤ 0.05, and
b + c < 0.20.

13. Nickel composite hydroxide according to any of claims 10 to 12 wherein said nickel composite hydroxide has a specific surface (BET) in the range of from 2 to 70 m²/g, determined according to.

14. Nickel composite hydroxide according to any of claims 10 to 13 wherein said nickel composite hydroxide has a width of particle diameter distribution, calculated as [(d90-d10)/(d50)] of at least 0.5.

15. Use of transition composite metal hydroxides according to any of claims 10 to 14 as precursors for the manufacture of cathode active materials for lithium ion batteries.
